(19) Europäisches Patentamt
European Patent Office
Office européen des brevets

(11) **EP 1 751 524 B1**

(12) **EUROPÄISCHE PATENTSCHRIFT**

(45) Veröffentlichungstag und Bekanntmachung des Hinweises auf die Patenterteilung:
**19.03.2014 Patentblatt 2014/12**

(21) Anmeldenummer: **05749114.4**

(22) Anmeldetag: **02.06.2005**

(51) Int Cl.:
***G01N 21/64*** *(2006.01)* ***G01N 21/75*** *(2006.01)*

(86) Internationale Anmeldenummer:
**PCT/EP2005/005957**

(87) Internationale Veröffentlichungsnummer:
**WO 2005/119220 (15.12.2005 Gazette 2005/50)**

(54) **VERFAHREN ZUM NACHWEIS DES PHOTOKATALYTISCHEN ABBAUS ORGANISCHER FARBSTOFFE MITTELS FLUORESZENZANALYSE**

METHOD FOR DETECTION OF THE PHOTOCATALYTIC DEGRADATION OF ORGANIC DYES BY MEANS OF FLUORESCENCE ANALYSIS

PROCEDE POUR DETECTER LA DEGRADATION PHOTOCATALYTIQUE DE COLORANTS ORGANIQUES PAR FLUORIMETRIE

(84) Benannte Vertragsstaaten:
**AT BE BG CH CY CZ DE DK EE ES FI FR GB GR HU IE IS IT LI LT LU MC NL PL PT RO SE SI SK TR**

(30) Priorität: **03.06.2004 DE 102004027118**

(43) Veröffentlichungstag der Anmeldung:
**14.02.2007 Patentblatt 2007/07**

(73) Patentinhaber: **Fraunhofer-Gesellschaft zur Förderung der angewandten Forschung e.V.**
**80686 München (DE)**

(72) Erfinder:
• **NEUMANN, Frank**
  **38100 Braunschweig (DE)**
• **CEREZUELA BARRETO, Mercedes**
  **38108 Braunschweig (DE)**

(74) Vertreter: **Pfenning, Meinig & Partner GbR**
**Patent- und Rechtsanwälte**
**Theresienhöhe 13**
**80339 München (DE)**

(56) Entgegenhaltungen:
**DE-C1- 19 919 539**

• **PATENT ABSTRACTS OF JAPAN Bd. 2003, Nr. 12, 5. Dezember 2003 (2003-12-05) -& JP 2004 138387 A (ULVAC-RIKO INC), 13. Mai 2004 (2004-05-13)**
• **PATENT ABSTRACTS OF JAPAN Bd. 2003, Nr. 12, 5. Dezember 2003 (2003-12-05) -& JP 2003 232786 A (NISSHIN STEEL CO LTD), 22. August 2003 (2003-08-22)**
• **PATENT ABSTRACTS OF JAPAN Bd. 2000, Nr. 09, 13. Oktober 2000 (2000-10-13) -& JP 2000 162129 A (SHINKU RIKO KK; FUJISHIMA AKIRA), 16. Juni 2000 (2000-06-16)**
• **PATENT ABSTRACTS OF JAPAN Bd. 2003, Nr. 06, 3. Juni 2003 (2003-06-03) -& JP 2003 050205 A (TOTO LTD), 21. Februar 2003 (2003-02-21)**
• **PATENT ABSTRACTS OF JAPAN Bd. 1999, Nr. 08, 30. Juni 1999 (1999-06-30) -& JP 11 083833 A (UBE NITTO KASEI CO LTD; HASHIMOTO KAZUHITO; FUJISHIMA AKIRA), 26. März 1999 (1999-03-26)**

**Beschreibung**

Die Erfindung betrifft ein Verfahren zur quantitativen Bestimmung des photokatalytischen Abbaus organischer Farbstoffe auf photokatalytisch aktiven Oberflächen mittels Fluoreszenzanalyse. Hierzu werden die zu untersuchenden Photokatalysatoren sowie photokatalytisch inaktive Referenzsubstrate mit organischen Farbstoffen oder organischen Farbstoffen enthaltenden Substanzen beschichtet. Anschließend werden die Proben mit UV- oder sichtbaren Licht bekannter Intensität und spektraler Verteilung bestrahlt und deren Fluoreszenzintensität mittels Fluoreszenzscanner, Chip-Reader oder Fluoreszenzmikroskop vor und nach der Bestrahlung sowie je nach Gerätekonfiguration auch während der Bestrahlung erfasst. Die dabei erfolgende Abnahme der Fluoreszenz des farbbeschichteten Photokatalysators im Vergleich zur mitbeschichteten aber photokatalytisch inaktiven Referenz (z.B. Quarzglas) gilt als quantitatives Maß für die photokatalytische Wirksamkeit der zu untersuchenden Probe.

Der Einsatz von Gegenständen des täglichen Lebens mit hydrophilen und photokatalytisch aktiven Oberflächen gewinnt zunehmend an Bedeutung. So werden heutzutage vermehrt photokatalytisch aktive Schichtsysteme eingesetzt, um Stahl-, Glas-, Keramik- und Kunststoffoberflächen selbstreinigend zu machen, Bakterien, Algen und Pilze abzutöten, die Luft zu reinigen oder das Beschlagen von Glasscheiben und Spiegeln zu mindern. Als Beschichtungsstoffe kommen dabei hauptsächlich Pulver, Kolloide oder dünne Schichten zum Einsatz. Ziel der Entwicklung moderner Photokatalysatoren ist es, die Materialeigenschaften dieser Systeme zu verbessern, um die photokatalytische Wirksamkeit zu erhöhen oder eine Aktivierbarkeit der Systeme auch bei Bestrahlung mit sichtbarem Licht ($\lambda > 380$ nm) zu ermöglichen, so dass diese auch für Innenraumanwendungen (z.B. im Automobil oder Haushalt) genutzt werden können.

Parallel hierzu gilt es, geeignete Verfahren zu entwickeln, die mittels einfacher Methoden ermöglichen, die photokatalytischen Abbaureaktionen auch quantitativ nachzuweisen. Während sich zum Nachweis der photoinduzierten Hydrophilie bereits verschiedene Betauungs- oder Kontaktwinkelmessverfahren etabliert haben, existieren zum Nachweis der photokatalytischen Wirksamkeit wenige mehr oder minder geeignete Analyseverfahren. Auch gibt es hier bis heute keinen allgemein gültigen Standard zum Nachweis photokatalytischer Aktivität. Neben vielschichtigen mikrobiologischen Tests werden vermehrt gaschromatographische, z.B. Methanoltest, und spektroskopische Nachweisverfahren, z.B. Extinktionsmessungen, zum Abbau organischer Substanzen eingesetzt. Wenige davon beschreiben Methoden mittels Abbau von Farbstoffen, und wenn, basieren diese meist auf Abbaureaktionen in wässrigen Lösungen.

Die US 5,163,626 und US 6,508,941 beschreiben ein Verfahren zum Nachweis des photokatalytischen Abbaus nicht näher spezifizierten organischen Materials in flüssigen, mit Titanoxidpulver versetzten Dispersionen unter UV-Bestrahlung. Es handelt sich in beiden Fällen um qualitative Verfahren zum Nachweis der photokatalytischen Reinigungswirkung flüssiger Medien. Festkörper wie Bleche, Fliesen oder Gläser können somit nicht untersucht werden. Auch ist keine quantitative oder ortsaufgelöste Bestimmung des photokatalytischen Abbaus des organischen Materials möglich.

Die US 5,245,551 beschreibt ein Verfahren zum Nachweis des Abbaus der Proteinkonzentration auf Substratträgern (Biochips) unter UV-Strahlung mittels vergleichender Absorptionsmessung. Dabei wird der an die Proteinketten angekoppelte Farbstoff bestrahlt und die zeitabhängige Abnahme des Extinktionskoeffizienten mittels linearer Regression aus den Absorptionsspektren bestimmt. Hierbei wird der Abbau des Farbstoffs bzw. der Proteine durch Photolyse, also durch Strahlungsschädigung ermittelt. Eine photokatalytische Abbaureaktion ist somit nicht nachzuweisen. Auch ist das Verfahren auf einfache Proteinreaktionen beschränkt.

Die US 6,673,738 beschreibt ein deodorierendes Aktivkohlesystem bestehend aus einer photokatalytisch beschichteten Oberfläche und zusätzlich darauf angebrachter Farb- oder Pigmentschicht. Die Farbschicht fungiert dabei als Indikator der Hydratationswirkung der photokatalytischen Aktivkohleschicht durch Farbumschlag. Auch hier wird die Farbschicht als qualitatives Nachweismedium eingesetzt, wobei deren Einsatz auf die Anwendung in Kombination mit dem Aktivkohlefilter beschränkt bleibt.

Die DE 199 19 539 C1 beschreibt ein Verfahren zur Messung und bildlichen Darstellung der Aktivität einer biologisch wirksamen Substanz in einem histologischen Präparat. Hierbei wird eine vergleichende Fluoreszenzanalyse zur Bestimmung der Aktivität einer biologisch wirksamen Substanz durchgeführt, bei der das Substrat mit einem geeigneten Farbstoff umgesetzt wird.

Die DE 101 33 273 A1 beschreibt ein Verfahren zum Nachweis der Photosynthese-hemmenden Wirkung von Substanzen, wobei z.B. eine vergleichende Luminszenzmessung in viskosen Medien von biologischen Substanzen zum Nachweis der Photosynthese-Hemmung durchgeführt wird.

Die JP 09119893 A beschreibt ein Verfahren zur Alterung von Farbstoff, bei dem mit Hilfe von Titandioxid als Photokatalysator und Bestrahlung mit Licht der photokatalytische Abbau des Farbstofffilms beschleunigt stattfindet, jedoch ohne ihn mittels vergleichender Fluoreszenzanalytik quantitativ zu verfolgen.

Weitere Verfahren zur Bestimmung der photokatalytischen Aktivität sind von der JP-2003 232 786 und der JP-2004 138 387 bekannt.

Somit beschreibt keines der aus dem Stand der Technik bekannten Verfahren die Möglichkeit des quantitativen Nachweises photokatalytischer Aktivität. Zudem beschränken sich alle Verfahren auf den Einsatz ultravioletter Strahlung.

Der Nachweis des deutlich schwächeren photokatalytischen Abbaus der meisten Photokatalysatoren bei Anregung mit sichtbarem Licht ist somit nicht möglich. Auch sind die meisten Verfahren nicht auf beliebigen Oberflächen oder Materialien anwendbar, noch wird die Möglichkeit einer ortsaufgelösten Bestimmung der photokatalytischen Aktivität heterogener Photokatalysatoren (z.B. im Fall von Gradientenschichten) beschrieben.

Ausgehend hiervon war es Aufgabe der vorliegenden Erfindung, ein Verfahren zur quantitativen Bestimmung des photokatalytischen Abbaus organischer Farbstoffe bereitzustellen, das eine Bestimmung auch bei Anregung mit sichtbarem Licht ermöglicht und das auf beliebigen Oberflächen anwendbar ist, so dass eine einfache und kostengünstige Verfahrensführung gegeben ist.

Diese Aufgabe wird durch das Verfahren mit den Merkmalen des Anspruchs 1 gelöst. Die weiteren abhängigen Ansprüche zeigen vorteilhafte Weiterbildungen auf.

Erfindungsgemäß wird ein Verfahren zur quantitativen Bestimmung des photokatalytischen Abbaus organischer Farbstoffe bereitgestellt, das auf der FluoreszenzAnalyse basiert und bei dem auf den Einsatz flüssiger Medien vollständig verzichtet werden kann, so dass ein trockenes Verfahren vorliegt. Es handelt sich somit um ein xerographisches Verfahren, welches ortsaufgelöste Messungen an verschiedenen Probeorten unter normalen Laborbedingungen bei konstanter Luftfeuchte, z.B. 50 % rel. Feuchte, ermöglicht und somit ein schnelles und effektives Materialscreening erlaubt.

Das erfindungsgemäße Verfahren basiert dabei auf folgenden Verfahrensschritten:

a) Zunächst wird mindestens ein Photokatalysator und eine photokatalytisch inaktive Referenz jeweils unmittelbar mit einem organischen Farbstoff und/oder einer mindestens einen organischen Farbstoff enthaltenden Substanz beschichtet.

b) Der Photokatalysator und die Referenz werden mittels einer Strahlungsquelle bestrahlt, wobei die Abnahme der Fluoreszenzintensitäten des Photokatalysators $\Delta I_P$ und der Referenz $\Delta I_R$ gemessen wird.

c) Schließlich erfolgt die Bestimmung der photokatalytischen Wirksamkeit $Q_{PH}$ des Photokatalysators aus der Abnahme der Fluoreszenzintensitäten $\Delta I$.

Das hier vorgestellte erfindungsgemäße Fluoreszenzverfahren stellt somit das einzig bekannte Verfahren dar, welches die genannten Nachteile des Standes der Technik beseitigt und es ermöglicht, auch Photokatalysatoren geringer Aktivität oder Photokatalysatoren bei Anregung im sichtbaren Spektralbereich auch ortsaufgelöst zu quantifizieren.

Nahezu alle lichtabsorbierenden Feststoffe, Flüssigkeiten oder Gase besitzen die Eigenschaft, einen Teil der absorbierten Energie in Form von Strahlung (Lumineszenz) zu reemittieren, vgl. Kröger, F. A., Luminescence of Solids, Elsevir Publishing Company, Inc., 1948. Organische Farbstoffe, insbesondere Lumogen- und Fluoreszenzfarbstoffe zeigen dabei eine ausgeprägte Lumineszenz mit Quantenausbeuten bis zu 95 % oder mehr. Werden diese Farbstoffe thermisch, photokatalytisch oder durch Strahlung verändert oder zerstört, ist dies durch eine veränderte Lumineszenz bzw. Fluoreszenz nachzuweisen.

Bei dem hier beschriebenen Verfahren können alle Arten organischer Pigmente und Farbstoffe, d.h. nichtionische, anionische und kationische, aber auch organische farbstoffhaltige Substanzen, wie z.B. Algen oder Bakterien, mit ausreichend guter Fluoreszenz und Lichtstabilität eingesetzt werden. Besonders bewährt haben sich jedoch spezielle Lumogen- und Fluoreszenzfarbstoffe (z.B. die Lumogen F Farbstoffe der BASF AG), aber auch Rhodamin, Eosin und Methylen-Blau.

Die Farbstoffe können vorzugsweise durch thermisches Aufdampfen, Aufsprühen, -rakeln oder -pinseln sowie durch Aufstäuben oder Eintauchen vorzugsweise in Schichtdicken von bis zu 100 nm, bevorzugt im Schichtdickenbereich von 1 bis 20 nm und besonders bevorzugt als Monolage auf die Proben aufgebracht werden. Besonders das thermische Aufdampfen ermöglicht hierbei das kontrollierte Aufbringen ultrahomogener Dünnfilme aus einer oder wenigen Atomlagen. Hierdurch wird erreicht, dass die so aufgebrachten homogenen Farbschichten im Anregungsbereich (ca. 300 bis 420 nm) nahezu absorptionsfrei sind ($A_{300-420}$ < 0,01 Abs), und die Linearität von Absorption und Fluoreszenz gewährt wird, vgl. Schmidt, W., Optische Spektroskopie, VCH Verlagsgesellschaft mbH, Weinheim 1994, Seite 205 ff. Zur Gewährleistung einer optimalen Vergleichbarkeit sind der zu untersuchende Photokatalysator sowie die Vergleichsprobe gleichzeitig zu beschichten.

Als Photokatalysatoren kommen vorzugsweise Pulver, Kolloide oder dünne Schichten zum Einsatz.

Vorzugsweise wird eine photokatalytische Beschichtung aus einem Metalloxid, insbesondere Titanoxid, Nioboxid, Vanadiumoxid bzw. Zinkoxid oder einem Metallkomplex aus Titanoxid oder einem anderen Metalloxid, z.B. Nioboxid, Vanadiumoxid oder Zinkoxid, mit Anteilen beliebiger Übergangsmetalle oder einem dotierten Metalloxid mit Kohlenstoff, Fluor, Stickstoff oder Schwefel als Dotiermittel verwendet.

Die photokatalytischen Beschichtungen können dabei in homogener oder heterogener Form vorliegen. Insbesondere können die heterogenen Beschichtungen einen lateralen oder vertikalen Schichtdicken- oder Materialgradienten (z.B. bei zu- oder abnehmendem Fremddotierungsgehalt) aufweisen.

Vorzugsweise werden als Substrate solche aus Glas, Metallen, Polymeren, Keramiken und/oder Holz verwendet. Ebenso können als Substrate anorganische oder organische Gewebe, z.B. Kunstseide, eingesetzt werden. Besonders bevorzugt sind hierbei Quarzglas oder Borosilikatglas. Die Substrate sind dabei vorzugsweise fluoreszenzarm. Unabhängig von diesen bevorzugten Ausführungsformen können aber sämtliche anderen bekannten Substrate verwendet werden.

Weiterhin werden nach einer weiteren bevorzugten Ausführungsform zwei separate Substrate verwendet, wobei eines der Substrate mit dem Photokatalysator und dem organischen Farbstoff, das andere Substrat nur mit dem organischen Farbstoff beschichtet wird. Ebenso ist es aber auch möglich, dass ein einziges Substrat eingesetzt wird, wobei das Substrat bereichsweise mit einem Photokatalysator beschichtet ist, während der unbeschichtete Bereich als photokatalytisch inaktive Referenz dient.

Die anschließende Bestrahlung der Proben kann vorzugsweise mit monochromatischen Quellen (z.B. Schwarzlichtlampe; 366 nm), Quellen mit definiertem Linienspektrum (z.B. Quecksilberdampflampe) oder durch breitbandige spektrale Anregung (z.B. Halogenlampe) erfolgen. Ebenso ist aber auch der Einsatz einer Laserdiode möglich. Die spektrale Verteilung der Lichtquellen sowie deren Beleuchtungsstärke sollten bekannt sein, zudem ist es vorteilhaft, die Bestrahlungsintensität konstant zu regeln. So wurden bei dem erfindungsgemäßen Verfahren für beide Lichtarten (UV-A und VIS) monochromatische und breitbandige Quellen mit konstanten Bestrahlungsstärken von $1*10^{-3}$ bis $1*10^{-1}$ $W/cm^2$ erfolgreich eingesetzt. Es ist jedoch darauf zu achten, dass jeweils der gleiche Quellentyp verwendet wird, und speziell bei der Anregung im Sichtbaren die spektrale Verteilung der Lichtquelle dem Verlauf des Sonnenspektrums, d.h. AM 1,5, ähnelt. Aufgrund der Alterung der Strahlungsquellen sollten die Leuchtmittel in regelmäßigen Abständen ausgewechselt werden.

Je nach Bestrahlungsstärke und photokatalytischer Aktivität der zu untersuchenden Probe hat die Akquisition der Messdaten vorzugsweise bei konstanter Luftfeuchte sowie in definierten Zeitintervallen zu erfolgen. Daher empfiehlt es sich, die Luftfeuchtigkeit und die optimalen Zeitintervalle der Messreihen in Vorversuchen zu ermitteln, oder diese während es Messablaufs konstant zu regeln. Vorteilhaft hierbei ist die Wahl der logarithmischen Zeitskala, da der Abbau unter Bestrahlung zuerst verstärkt auftritt und danach stetig abnimmt. Zum Beispiel führt eine Belichtungsreihe mit Messungen nach 10, 20, 30, 45, 60, 120, 180, 300, 600, 900, 1200, 1500 und 1800 Sekunden (gemessen für 5 nm Lumogen Orange und konstante Bestrahlung vo 1 $mW/cm^2$) in den meisten Fällen zu sehr gut verwertbaren Ergebnissen.

Ebenso ist es auch möglich, dass die Messung vor und nach der Bestrahlung erfolgt oder für die Messung eine gleichmäßige Zeitskala gewählt wird.

Die zur Datenakquisition eingesetzten und meist mit einem empfindlichen CCD-Array ausgestatteten Fluoreszenzscanner, Chip-Reader oder Fluoreszenzmikroskope sollten über verschiedene Anregungs- und Detektionsfilter verfügen, die auf die eingesetzten Farbmittel abzustimmen sind. Vorzugsweise können hier konventionelle FITC-(Ex494; Em518), Cy3-(Ex550; Em570) und Cy5-Filter (Ex649; Em670) eingesetzt werden, da diese die Anregungs- und Detektionswellenlängenbereiche der gängigsten Fluoreszenzfarbstoffe abdecken. Die Messung selber erfolgt durch ortsaufgelöste Aufnahme der Fluoreszenz der zu untersuchenden Proben. Dabei ist es notwendig, das Gerät mit Hilfe eines Fluoreszenzstandards bekannter Intensität (z.B. FluorIS, CLONDIAG chip technologies GmbH) vor jeder Messreihe zu kalibrieren. Die Fluoreszenzintensität der mit Farbstoff bedampften Proben wird nach jedem Belichtungsintervall erfasst und in einem Graphen als Intensität über Zeit abgetragen. Je nach Ausprägung der so erhaltenen Kurven sind die Messwerte mittels Exponentialfit erster oder zweiter Ordnung gemäß

$$y = A_1 \cdot e^{\left(\frac{-x}{t_1}\right)} + y_0 \quad \text{oder} \quad y = A_1 \cdot e^{\left(\frac{-x}{t_1}\right)} + A_2 \cdot e^{\left(\frac{-x}{t_2}\right)} + y_0$$

anzupassen und die Start- und Endwerte $y$ und $y_0$ der Messreihen zu ermitteln. Neben diesen Exponentialfits erster und zweiter Ordnung können aber auch genauso andere Fits höherer Ordnung sowie allgemein jeder andere den Kurvenverlauf beschreibende Algorithmus zur Messanpassung und Auswertung eingesetzt werden. Der hieraus ermittelte Quotient $Q$ aus Intensitätsdifferenz $\Delta I$ und Anfangsintensität $y$ vor und nach der Bestrahlung mit

$$Q = \frac{\Delta I}{y} \quad \text{und} \quad \Delta I = y - y_0$$

beschreibt so das Maß des Abbaus der auf die Proben aufgebrachten Farbstoffmoleküle. Da davon auszugehen ist, dass die Abnahme der Intensität der photokatalytisch inaktiven Referenzprobe R vornehmlich durch Photolyse, d.h. durch Zersetzung mit Licht, bewirkt wird, und der Farbstoffabbau des Photokatalysators P auf einem kombinierten Effekt aus Photolyse und Photokatalyse beruht, gilt für die photokatalytische Wirksamkeit $Q_{PH}$ bei gleichbehandelter Probe und Referenz:

$$Q_{PH} = Q_P - Q_R$$

Unter Einbeziehung der Bandkante des Photokatalysators und seiner Absorptivität im jeweiligen Anregungsbereich sowie der verabreichten Bestrahlungsdosis, lässt sich der spezifische photokatalytische Wirkungsgrad (das Verhältnis der durch Photokatalyse zerstörten Bindungspaare in Relation zum einfallenden, photokatalytisch wirksamen Lichtquant) aus $Q_{PH}$ bei bekannter Farbstoffmenge, -dichte und der Anzahl der Bindungspaare im Molekül für jedes photokatalytische Material bestimmen.

Unter Berücksichtigung einer angemessenen Fehlerbetrachtung ermöglicht das Fluoreszenzmessverfahren so die Bestimmung der photokatalytischen Wirksamkeit mit einer Genauigkeit von bis zu $\pm$ 2%, was einer Auflösung bei spektrometrischen Extinktionsmessungen von 0,0004 Abs entspricht. Somit sind auch kleinste Unterschiede photokatalytischer Aktivität, wie zum Beispiel bei nahezu inaktiven Proben bei Anregung im Sichtbaren (s. Beispiel 2), noch hinreichend gut nachzuweisen.

Anhand der nachfolgenden Beispiele soll das erfindungsgemäße Verfahren näher erläutert werden, ohne dieses auf die speziellen Ausführungsformen in diesen Beispielen zu beschränken.

Beispiel 1

Bestimmung der photokatalytischen Wirksamkeit von $TiO_2$ auf Glas bei Anregung im UV-A

Für die vorliegenden Beispiele wurden folgende Kenngrößen verwendet:

| | |
|---|---|
| Substrat: | Quarzglas (Corning 7940) |
| Referenz: | Quarzglas (Corning 7940) |
| Schichtsystem: | 400 nm $TiO_2$, gesputtert |
| Farbstoff: | 5 nm Lumogen F Orange 240 (BASF), thermisch aufgedampft |
| Belichtung: | UV-Handlampe 366 nm (Roth 469.1), 1,3 mW/cm$^2$ |
| Belichtungsdauer: | 30 min |
| Fluorometer: | Biodetect® 645/4 (Fraunhofer IPM) |
| Filter: | FITC ($\lambda_{ex}$ = 490 $\pm$ 5 nm; $\lambda_{em}$ = 530 $\pm$ 15 nm) |

Unter den gegebenen Randbedingungen zeigt Fig. 1 die Abbaukurven des photokatalytischen Titanoxids im Vergleich zur inaktiven Quarzreferenz bei monochromatischer UV-Bestrahlung im Zeitraum von 30 Minuten.

Gemäß Exponentialfit 2. Ordnung liefert der Kurvenfit folgende in Tabelle 1 dargestellte Werte:

Tabelle 1:

| Probe: | Referenz: |
|---|---|
| y0 = 35849,54 | y0 = 49798,14 |
| A1 = 9992,88 | A1 = 1556,23 |
| t1 = 69,51 | t1 = 37,66 |
| A2 = 10780,09 | A2 = 1556,21 |
| t2 = 653,50 | t2 = 37,67 |
| R^2 = 0,99197 (Korrelation) | R^2 = 0,98796 (Korrelation) |

Somit ergibt sich unter Berücksichtigung der ermittelten Kurvenkorrelation für den Zeitpunkt x = 0

$$y_P = 56623 \pm 455 \quad \text{und} \quad y_R = 52910 \pm 637$$

sowie bei x -> $\infty$

$$y0_P = 35850 \pm 288 \quad \text{und} \quad y0_R = 49798 \pm 599 \,.$$

Daraus ergibt sich

$$Q_P = 0{,}3669 \pm 0{,}011 [36{,}7 \pm 1\%] \quad \text{und} \quad Q_R = 0{,}0588 \pm 0{,}022 [5{,}9 \pm 2\%]$$

Die mit UV-Strahlung der Intensität von 1,3 mW/cm$^2$ bestrahlte Probe weist somit eine rechnerisch verbesserte photokatalytische Wirksamkeit von $Q_{PH}$ = 30,8 $\pm$ 2 % auf.

Beispiel 2

Bestimmung der photokatalytischen Wirksamkeit von TiO$_2$ auf Glas bei Anregung im sichtbaren (> 420 nm)
In diesem Beispiel wurden folgende Kenngrößen verwendet:

| | |
|---|---|
| Substrat: | Quarzglas (Corning 7940 |
| Referenz: | Quarzglas (Corning 7940) |
| Schichtsystem: | 400 nm TiO$_2$, gesputtert |
| Farbstoff: | 5 nm Lumogen F Orange 240 (BASF), thermisch aufgedampft |
| Belichtung: | Xe-Hochdrucklampe (Osram XBO 75); 7,5 mW/cm$^2$ |
| Bandkantenfilter: | Schott GG420 |
| Belichtungsdauer: | 30 min |
| Fluorometer: | Biodetect® 645/4 (Fraunhofer IPM) |
| Filter: | FITC ($\lambda_{ex}$ = 490 $\pm$ 5 nm; $\lambda_{em}$ = 530 $\pm$ 15 nm) |

Unter den gegebenen Randbedingungen zeigt Abbildung 2 die Abbaukurven des photokatalytischen Titanoxids im Vergleich zur inaktiven Referenz mit sichtbarem Licht im Zeitraum von 30 Minuten.
Gemäß Exponentialfit 2. Ordnung liefert der Kurvenfit folgende in Tabelle 2 dargestellten Werte:

**Tabelle 2:**

| Probe: | Referenz: |
|---|---|
| y0 = 45972,13 | y0 = 49411,71 |
| A1 = 5297,90 | A1 = 756,61 |
| t1 = 1197,79 | t1 = 13,20 |
| A2 = 1431,45 | A2 = 4375,97 |
| t2 = 5,88 | t2 = 2452,24 |
| R^2 = 0,99311 (Korrelation) | R^2 = 0,98182 (Korrelation) |

Somit ergibt sich unter Berücksichtigung der ermittelten Kurvenkorrelation für den Zeitpunkt x=0

$$y_P = 52701 \pm 363 \quad \text{und} \quad y_R = 54545 \pm 992$$

sowie bei x -> ∞

$$y0_P = 45972 \pm 317 \quad \text{und} \quad y0_R = 49412 \pm 898 \,.$$

Daraus ergibt sich

$$Q_P = 0{,}1277 \pm 0{,}012 \, [12{,}8 \pm 1\%] \quad \text{und} \quad Q_R = 0{,}0941 \pm 0{,}032 \, [9{,}4 \pm 3\%]$$

Die mit sichtbarem Licht der Intensität von 7,5 mW/cm$^2$ bestrahlte Probe weist somit eine rechnerisch verbesserte Wirksamkeit von $Q_{PH}$ = 3,4 $\pm$ 2 % gegenüber der photokatalytisch nicht aktiven Referenz auf. Die untersuchte Probe zeigt daher nur eine sehr geringe photokatalytische Aktivität bei Bestrahlung mit sichtbarem Licht.

**Patentansprüche**

1. Verfahren zur quantitativen Bestimmung des photokatalytischen Abbaus organischer Farbstoffe mittels Fluoreszenz-Analyse, bei dem

   a) mindestens ein Photokatalysator und eine photokatalytische inaktive Referenz jeweils unmittelbar mit mindestens einem organischen Farbstoff und/oder eine mindestens einen organischen Farbstoff enthaltenden Substanz beschichtet werden,
   b) der farbbeschichtete Photokatalysator und die farbbeschichtete Referenz mit einer Strahlungsquelle bestrahlt werden, wobei die Abnahme der Fluoreszenzintensitäten des farbbeschichteten Photokatalysators $\Delta I_P$ und der farbbeschichteten Referenz $\Delta I_R$ gemessen werden und
   c) die photokatalytische Wirksamkeit $Q_{PH}$ des Photokatalysators aus der Abnahme der Fluoreszenzintensitäten bestimmt wird.

2. Verfahren nach Anspruch 1,
   **dadurch gekennzeichnet, dass** die organischen Farbstoffe anionische, kationische und/oder nicht-ionische Farbstoffe sind.

3. Verfahren nach Anspruch 2,
   **dadurch gekennzeichnet, dass** die organischen Farbstoffe Lumogenfarbstoffe und/oder Fluoreszenzfarbstoffe, insbesondere Fluorescein, sind.

4. Verfahren nach einem der Ansprüche 1 bis 3,
   **dadurch gekennzeichnet, dass** die mindestens einen organischen Farbstoff enthaltenden Substanzen Algen oder Bakterien sind.

5. Verfahren nach einem der vorhergehenden Ansprüche,
   **dadurch gekennzeichnet, dass** die organischen Farbstoffe und/oder organische Farbstoffe enthaltende Substanzen durch Aufdampfen, Aufsprühen, Aufstäuben, Eintauchen, Rakeln oder Aufpinseln aufgebracht werden.

6. Verfahren nach einem der vorhergehenden Ansprüche,
   **dadurch gekennzeichnet, dass** die organischen Farbstoffe in einer Schichtdicke von 1 bis 100 nm, insbesondere von 1 bis 20 nm aufgetragen werden.

7. Verfahren nach einem der vorhergehenden Ansprüche,
   **dadurch gekennzeichnet, dass** die organischen Farbstoffe als Monolage aufgetragen werden.

8. Verfahren nach einem der vorhergehenden Ansprüche,
   **dadurch gekennzeichnet, dass** als Referenz Substrate aus Glas, Metalle, Polymere, Keramiken, organische oder anorganische Gewebe und/oder Holz, insbesondere Quarzglas oder Borosilikatglas, eingesetzt wird.

9. Verfahren nach dem vorhergehenden Anspruch,
   **dadurch gekennzeichnet, dass** das Substrat fluoreszenzarm ist.

10. Verfahren nach einem der vorhergehenden Ansprüche,
    **dadurch gekennzeichnet, dass** zwei separate Substrate verwendet werden, wobei eines der Substrate mit dem Photokatalysator und dem organischen Farbstoff, das andere Substrat als Referenz nur mit dem organischen Farbstoff beschichtet wird.

**11.** Verfahren nach einem der Ansprüche 1 bis 9,
**dadurch gekennzeichnet, dass** ein einziges Substrat eingesetzt wird, wobei das Substrat bereichsweise mit einem Photokatalysator beschichtet ist, während der unbeschichtete Bereich als photokatalytisch inaktive Referenz dient.

**12.** Verfahren nach einem der vorhergehenden Ansprüche,
**dadurch gekennzeichnet, dass** eine photokatalytische Beschichtung aus einem Metalloxid, insbesondere Titanoxid, Nioboxid, Vanadiumoxid oder Zinkoxid, einem Metallkomplex aus einem Metalloxid, insbesondere Titanoxid, Nioboxid, Vanadiumoxid oder Zinkoxid mit Anteilen beliebiger Übergangsmetalle oder einem dotierten Metalloxid mit C, F, N oder S als Dotiermittel besteht.

**13.** Verfahren nach einem der vorhergehenden Ansprüche,
**dadurch gekennzeichnet, dass** die photokatalytische Beschichtung homogen oder heterogen ist.

**14.** Verfahren nach einem der vorhergehenden Ansprüche,
**dadurch gekennzeichnet, dass** als Strahlungsquelle eine monochromatische Quelle, insbesondere eine Schwarzlichtlampe eingesetzt wird.

**15.** Verfahren nach einem der vorhergehenden Ansprüche,
**dadurch gekennzeichnet, dass** als Strahlungsquelle eine Strahlungsquelle mit definiertem Linienspektrum, insbesondere eine Quecksilberdampflampe, eingesetzt wird.

**16.** Verfahren nach einem der vorhergehenden Ansprüche,
**dadurch gekennzeichnet, dass** als Strahlungsquelle eine breitbandige spektrale Quelle, insbesondere eine Halogenlampe, eingesetzt wird.

**17.** Verfahren nach einem der vorhergehenden Ansprüche,
**dadurch gekennzeichnet, dass** als Strahlungsquelle eine Laserdiode eingesetzt wird.

**18.** Verfahren nach einem der vorhergehenden Ansprüche,
**dadurch gekennzeichnet, dass** die Strahlungsquelle eine Bestrahlungsstärke von $10^{-4}$ bis 1 W/cm$^2$, insbesondere $10^{-3}$ bis $10^{-1}$ W/cm$^2$ aufweist.

**19.** Verfahren nach einem der vorhergehenden Ansprüche,
**dadurch gekennzeichnet, dass** die Fluoreszenzmessung in Schritt b) bei konstanter Luftfeuchte durchgeführt wird.

**20.** Verfahren nach einem der vorhergehenden Ansprüche,
**dadurch gekennzeichnet, dass** die Fluoreszenzmessung in Schritt b) in logarithmischen oder gleichmäßigen Zeitintervallen erfolgt.

**21.** Verfahren nach einem der vorhergehenden Ansprüche,
**dadurch gekennzeichnet, dass** die Fluoreszenzmessung in Schritt b) mit einem Fluoreszenzscanner, einem Chip-Reader oder einem Fluoreszenzmikroskop erfolgt.

**22.** Verfahren nach einem der vorhergehenden Ansprüche,
**dadurch gekennzeichnet, dass** die Fluoreszenzmessung ortsaufgelöst durchgeführt wird.

**23.** Verfahren nach einem der vorhergehenden Ansprüche,
**dadurch gekennzeichnet, dass** die Bestrahlung in Schritt b) im UV-, d.h. 200 bis 400 nm, oder VIS-Bereich, d.h. 400 bis 700 nm, erfolgt.

**24.** Verfahren nach einem der vorhergehenden Ansprüche,
**dadurch gekennzeichnet, dass** über ein Exponential fit 1. oder 2. Ordnung mit

$$y = A_1 \cdot e^{\left(\frac{-x}{t_1}\right)} + y_0 \quad \text{oder} \quad y = A_1 \cdot e^{\left(\frac{-x}{t_1}\right)} + A_2 \cdot e^{\left(\frac{-x}{t_2}\right)} + y_0$$

die Anfangs- und Endintensität $y$ und $y_0$ ermittelt werden, aus denen die Intensitätsdifferenz $\Delta I$ mit

$$\Delta I = y - y_0$$

bestimmt wird, hieraus der Quotient $Q$ aus Intensitätsdifferenz $\Delta I$ und Anfangsintensität $y$ berechnet wird, woraus die photokatalytische Wirksamkeit $Q_{PH}$ über

$$Q_{PH} = Q_P - Q_R$$

erhalten wird.

**Claims**

1. Method for the quantification of the photocatalytic decomposition of organic dyes by means of fluorescence analysis, in which

   a) at least one photocatalyst and a photocatalytically inactive reference are each coated directly with at least one organic dye and/or a substance containing at least one organic dye,
   b) the photocatalyst coated with dye and the reference coated with dye are irradiated with a radiation source, the reduction in the fluorescence intensities of the photocatalyst coated with dye $\Delta I_P$ and of the reference coated with dye $\Delta I_R$ being measured, and
   c) the photocatalytic efficiency $Q_{PH}$ of the photocatalyst is determined from the reduction in the fluorescence intensities.

2. Method according to claim 1, **characterised in that** the organic dyes are anionic, cationic and/or nonionic dyes.

3. Method according to claim 2, **characterised in that** the organic dyes are Lumogen dyes and/or fluorescent dyes, especially fluorescein.

4. Method according to one of claims 1 to 3, **characterised in that** the substances containing at least one organic dye are algae or bacteria.

5. Method according to one of the preceding claims, **characterised in that** the organic dyes and/or the substances containing organic dyes are applied by vapour deposition, spraying, sputtering, immersion, knife-coating or by brush.

6. Method according to one of the preceding claims, **characterised in that** the organic dyes are applied in a layer thickness of 1 to 100 nm, especially 1 to 20 nm.

7. Method according to one of the preceding claims, **characterised in that** the organic dyes are applied as a monolayer.

8. Method according to one of the preceding claims, **characterised in that** substrates formed from glass, metals, polymers, ceramics, organic or inorganic fabrics and/or wood, especially quartz glass or borosilicate glass, are used as the reference.

9. Method according to the preceding claim, **characterised in that** the substrate is low in fluorescence.

10. Method according to one of the preceding claims, **characterised in that** two separate substrates are used, one of the substrates being coated with the photocatalyst and the organic dye and the other substrate, as the reference, being coated only with the organic dye.

11. Method according to one of claims 1 to 9, **characterised in that** a single substrate is used, the substrate being coated in areas with a photocatalyst and the uncoated area serving as the photocatalytically inactive reference.

12. Method according to one of the preceding claims, **characterised in that** a photocatalytic coating consists of a metal oxide, especially titanium oxide, niobium oxide, vanadium oxide or zinc oxide, a metal complex comprising a metal oxide, especially titanium oxide, niobium oxide, vanadium oxide or zinc oxide with portions of any desired transition metals, or a doped metal oxide with C, F, N or S as the doping agent.

13. Method according to one of the preceding claims, **characterised in that** the photocatalytic coating is homogeneous or heterogeneous.

14. Method according to one of the preceding claims, **characterised in that** a monochromatic source, especially a black light lamp, is used as the radiation source.

15. Method according to one of the preceding claims, **characterised in that** a radiation source having a defined line spectrum, especially a mercury vapour lamp, is used as the radiation source.

16. Method according to one of the preceding claims, **characterised in that** a broadband spectral source, especially a halogen lamp, is used as the radiation source.

17. Method according to one of the preceding claims, **characterised in that** a laser diode is used as the radiation source.

18. Method according to one of the preceding claims, **characterised in that** the radiation source has an irradiation intensity of $10^{-4}$ to 1 W/cm$^2$, especially $10^{-3}$ to $10^{-1}$ W/cm$^2$.

19. Method according to one of the preceding claims, **characterised in that** the fluorescence measurement in step b) is carried out at constant atmospheric humidity.

20. Method according to one of the preceding claims, **characterised in that** the fluorescence measurement in step b) takes place at logarithmic or regular time intervals.

21. Method according to one of the preceding claims, **characterised in that** the fluorescence measurement in step b) takes place with a fluorescence scanner, a chip reader or a fluorescence microscope.

22. Method according to one of the preceding claims, **characterised in that** the fluorescence measurement is carried out in a locally resolved manner.

23. Method according to one of the preceding claims, **characterised in that** the irradiation in step b) takes place in the UV range, i.e. 200 to 400 nm, or in the visible range, i.e. 400 to 700 nm.

24. Method according to one of the preceding claims, **characterised in that** the initial intensity and final intensity $y$ and $y_0$ are determined via an exponential fit of the 1$^{st}$ or 2$^{nd}$ order with

$$y = A_1 \cdot e^{\left(\frac{-x}{t_1}\right)} + y_0 \quad \text{or} \quad y = A_1 \cdot e^{\left(\frac{-x}{t_1}\right)} + A_2 \cdot e^{\left(\frac{-x}{t_2}\right)} + y_0$$

from which values the intensity difference ∆I as

$$\Delta I = y - y_0$$

is determined and from this the quotient $Q$ of the intensity difference $\Delta I$ and the initial intensity $y$ is calculated, from which the photocatalytic efficiency $Q_{PH}$ is obtained via

$$Q_{PH} = Q_P - Q_R$$

**Revendications**

1. Procédé de détermination quantitative de la dégradation photocatalytique de colorants organiques au moyen d'une analyse par fluorescence, dans lequel

   a) au moins un photocatalyseur et une référence photocatalytiquement inactive sont, respectivement, directement revêtus d'au moins un colorant organique et/ou d'une substance contenant au moins un colorant organique,
   b) le photocatalyseur revêtu du colorant et la référence revêtue du colorant sont irradiés par une source de rayonnement, la diminution des intensités de fluorescence du photocatalyseur revêtu du colorant $\Delta I_p$ et de la référence revêtue du colorant $\Delta I_R$ étant mesurée, et
   c) l'activité photocatalytique $Q_{pH}$ du photocatalyseur est déterminée à partir de la diminution des intensités de fluorescence.

2. Procédé selon la revendication 1, **caractérisé en ce que** les colorants organiques sont des colorants anioniques, cationiques et/ou non ioniques.

3. Procédé selon la revendication 2, **caractérisé en ce que** les colorants organiques sont des colorants Lumogen et/ou des colorants fluorescents, en particulier la fluorescéine.

4. Procédé selon l'une quelconque des revendications 1 à 3, **caractérisé en ce que** les substances contenant au moins un colorant organique sont des algues ou des bactéries.

5. Procédé selon l'une quelconque des revendications précédentes, **caractérisé en ce que** les colorants organiques et/ou les substances contenant des colorants organiques sont appliqués par dépôt sous vide, par pulvérisation, par pulvérisation cathodique, au trempé, à la racle ou au pinceau.

6. Procédé selon l'une quelconque des revendications précédentes, **caractérisé en ce que** les colorants organiques sont étalés sur une épaisseur de couche allant de 1 à 100 nm, en particulier de 1 à 20 nm.

7. Procédé selon l'une quelconque des revendications précédentes, **caractérisé en ce que** les colorants organiques sont étalés sous forme d'une monocouche.

8. Procédé selon l'une quelconque des revendications précédentes, **caractérisé en ce qu'**on utilise en tant que référence des substrats en verre, métaux, polymères, céramiques, tissus organiques ou inorganiques et/ou bois, en particulier en verre quartzeux ou en verre au borosilicate.

9. Procédé selon la revendication précédente, **caractérisé en ce que** le substrat est faiblement fluorescent.

10. Procédé selon l'une quelconque des revendications précédentes, **caractérisé en ce qu'**on utilise deux substrats distincts, l'un des substrats étant revêtu du photocatalyseur et du colorant organique, l'autre substrat servant de référence n'étant revêtu que du colorant organique.

11. Procédé selon l'une quelconque des revendications 1 à 9, **caractérisé en ce qu'**on utilise un substrat unique, le substrat étant par zones revêtu d'un photocatalyseur, tandis que la zone non revêtue sert de référence photocatalytiquement inactive.

12. Procédé selon l'une quelconque des revendications précédentes, **caractérisé en ce qu'**un revêtement photocatalytique se compose d'un oxyde métallique, en particulier l'oxyde de titane, l'oxyde de niobium, l'oxyde de vanadium ou l'oxyde de zinc, d'un complexe métallique composé d'un oxyde métallique, en particulier l'oxyde de titane, l'oxyde de niobium, l'oxyde de vanadium ou l'oxyde de zinc avec certaines proportions de métaux de transition quelconques, ou d'un oxyde métallique dopé par C, F, N ou S servant de dopants.

13. Procédé selon l'une quelconque des revendications précédentes, **caractérisé en ce que** le revêtement photocatalytique est homogène ou hétérogène.

14. Procédé selon l'une quelconque des revendications précédentes, **caractérisé en ce qu'**on utilise en tant que source de rayonnement une source monochromatique, en particulier une lampe à lumière noire.

**15.** Procédé selon l'une quelconque des revendications précédentes, **caractérisé en ce qu'**on utilise en tant que source de rayonnement une source de rayonnement présentant un spectre de raies défini, en particulier une lampe à vapeur de mercure.

**16.** Procédé selon l'une quelconque des revendications précédentes, **caractérisé en ce qu'**on utilise en tant que source de rayonnement une source spectrale à large bande, en particulier une lampe à halogène.

**17.** Procédé selon l'une quelconque des revendications précédentes, **caractérisé en ce qu'**on utilise en tant que source de rayonnement une diode laser.

**18.** Procédé selon l'une quelconque des revendications précédentes, **caractérisé en ce que** la source de rayonnement présente une intensité de rayonnement allant de $10^{-4}$ à $1\ W/cm^2$, en particulier de $10^{-3}$ à $10^{-1}\ W/cm^2$.

**19.** Procédé selon l'une quelconque des revendications précédentes, **caractérisé en ce que** la mesure de la fluorescence à l'étape b) est mise en oeuvre en présence d'une humidité de l'air constante.

**20.** Procédé selon l'une quelconque des revendications précédentes, **caractérisé en ce que** la mesure de la fluorescence à l'étape b) s'effectue à des intervalles de temps logarithmiques ou réguliers.

**21.** Procédé selon l'une quelconque des revendications précédentes, **caractérisé en ce que** la mesure de la fluorescence à l'étape b) s'effectue à l'aide d'un scanner à fluorescence, d'un lecteur de puce ou d'un microscope à fluorescence.

**22.** Procédé selon l'une quelconque des revendications précédentes, **caractérisé en ce que** la mesure de la fluorescence est mise en oeuvre avec une résolution locale.

**23.** Procédé selon l'une quelconque des revendications précédentes, **caractérisé en ce que** l'irradiation à l'étape b) s'effectue dans le domaine UV, c.-à-d. de 200 à 400 nm, ou dans le domaine VIS, c.-à-d. 400 à 700 nm.

**24.** Procédé selon l'une quelconque des revendications précédentes, **caractérisé en ce que**, à l'aide d'un ajustement exponentiel du premier ou du deuxième ordre, avec

$$y = A_1 \cdot e^{\left(\frac{-x}{t_1}\right)} + y_0 \quad \text{ou} \quad y = A_1 \cdot e^{\left(\frac{-x}{t_1}\right)} + A_2 \cdot e^{\left(\frac{-x}{t_2}\right)} + y_0$$

on détermine l'intensité initiale et l'intensité finale $y$ et $y_0$, à partir desquelles on détermine la différence d'intensité $\Delta I$, avec

$$\Delta I = y - y_0$$

à partir de là, on calcule le quotient $Q$ entre la différence d'intensité $\Delta I$ et l'intensité initiale $y$, à partir duquel on obtient l'activité catalytique $Q_{PH}$ par

$$Q_{PH} = Q_P - Q_R$$

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5163626 A
- US 6508941 B
- US 5245551 A
- US 6673738 B
- DE 19919539 C1
- DE 10133273 A1
- JP 09119893 A
- JP 2003232786 B
- JP 2004138387 B

**In der Beschreibung aufgeführte Nicht-Patentliteratur**

- **KRÖGER, F. A.** Luminescence of Solids. Elsevir Publishing Company, Inc, 1948
- **SCHMIDT, W.** Optische Spektroskopie. VCH Verlagsgesellschaft mbH, 1994, 205 ff